# FASCICULE DE BREVET EUROPEEN

(11) **EP 2 678 542 B1**
(45) Date de publication et mention de la délivrance du brevet: **14.07.2021**
(21) Numéro de dépôt: 12709928.1
(22) Date de dépôt: 17.02.2012
(51) Int. Cl.: F02C 7/228, F02C 9/28, F02C 9/34

(54) **TURBOMACHINE COMPORTANT UN DISPOSITIF D'INJECTION PRIVILEGIEE ET PROCEDE D'INJECTION CORRESPONDANT**
TURBOMASCHINE MIT EINER PRIVILEGIERTEN INJEKTIONSVORRICHTUNG UND ENTSPRECHENDES INJEKTIONSVERFAHREN
TURBOMACHINE COMPRISING A PRIVILEGED INJECTION DEVICE AND CORRESPONDING INJECTION METHOD

(30) Priorité: 21.02.2011 FR 1151388
(43) Date de publication de la demande: 01.01.2014
(73) Titulaire: Safran Helicopter Engines, 64510 Bordes (FR)
(72) Inventeur: ROYER, Eric, F-64160 Serres Morlaas (FR); BENEZECH, Philippe, Jean, René, Marie, 64160 Morlaas (FR); RUPERT, Pascal, F-64140 Lons (FR)
(74) Mandataire: Cabinet Beau de Loménie
(86) Numéro de dépôt international: PCT/FR2012/050345
(87) Numéro de publication internationale: WO 2012/114025

(56) Documents cités:
- EP-A1- 0 399 692
- EP-A1- 0 522 832
- EP-A2- 1 278 014
- DE-A1- 10 032 471
- GB-A- 2 450 515
- JP-A- 63 201 329
- US-A- 4 217 754
- US-A- 5 257 502
- US-A- 5 345 757

## Description

L'invention concerne de façon générale l'injection de carburant dans une chambre de combustion de turbomachines et plus particulièrement un dispositif et un procédé pour réguler une injection privilégiée de carburant. Le domaine d'application de l'invention est notamment celui des turbomachines industrielles et des turbomachines aéronautiques.

L'invention concerne une turbomachine dans laquelle l'arbre du générateur de gaz est notamment entrainé grâce à des gaz passant par une chambre de combustion dans laquelle l'injection de carburant est réalisée grâce à un dispositif d'injection. Plus précisément, l'invention porte sur une turbomachine équipée d'une chambre de combustion, d'un dispositif d'injection de carburant dans la chambre de combustion et de moyens d'alimentation pour alimenter en carburant le dispositif d'injection de carburant.

Un système d'alimentation privilégiée est connu par le document US 6 857 272. Ce système d'alimentation privilégiée fonctionne sur la base de plages de fonctionnement prédéterminées en fonction du débit du carburant, dans lesquelles l'injection privilégiée est activée ou pas.

Cependant, un tel système présente l'inconvénient de s'activer même lors de régimes pour lesquels ce n'est pas nécessaire. En effet, il existe des régimes stationnaires à faible débit de carburant qui ne présentent pas de risque d'extinction, où l'alimentation privilégiée est activée alors que ce n'est pas nécessaire. Dans ce cas, un sillage chaud se forme, ce qui peut dans certains cas extrêmes ovaliser les anneaux de turbine.

D'autres systèmes d'alimentation pour turbomachines sont connus de US 5 257 502, GB 2 450 515, DE 100 32 471, EP 0 399 692 et US 4 217 754.

L'invention a pour but de proposer une turbomachine et un procédé de régulation d'injection de carburant dans lesquels la combustion du carburant dans la chambre de combustion reste peu affectée par les fortes variations de régime de la turbomachine tout en évitant de former un sillage chaud.

L'invention est définie par la revendication 1 et vise une turbomachine qui comporte des moyens de détermination de la variation instantanée du débit de carburant des moyens d'alimentation, et des moyens de régulation pour réguler le débit de carburant du dispositif d'injection en fonction de la variation instantanée du débit de carburant des moyens d'alimentation déterminée par les moyens de détermination.

Par « variation instantanée » on entend une variation sur une très courte durée, par exemple sur une durée de l'ordre d'une demi-seconde (0.5 s) ou moins, ou encore de l'ordre d'un quart de seconde (0.25 s) ou moins. Pour déterminer le débit de carburant requis dans la chambre de combustion, les moyens de régulation utilisent notamment comme paramètre la variation instantanée du débit de carburant des moyens d'alimentation. Cette variation est représentative du régime de la turbomachine. Ainsi, le débit de carburant délivré dans la chambre de combustion par le dispositif d'injection est ajusté en fonction de la variation instantanée du débit de carburant des moyens d'alimentation, c'est-à-dire en fonction de variations de régime de la turbomachine.

Notons que si le débit instantané de carburant des moyens d'alimentation augmente, la variation instantanée du débit des moyens d'alimentation est positive. Inversement, si le débit instantané de carburant des moyens d'alimentation diminue, la variation instantanée du débit des moyens d'alimentation est négative. Ainsi, lors d'une accélération, la variation instantanée du débit des moyens d'alimentation est positive, tandis que cette dernière est négative lors d'une décélération.

Par exemple, si la variation instantanée est importante, positive ou négative, alors les moyens de régulation ajustent le débit de carburant du dispositif d'injection. Ainsi, il est possible d'assurer un débit minimum de carburant du dispositif d'injection dans la chambre de combustion qui entretien la combustion. En d'autres termes, lorsque les moyens de détermination déterminent une forte variation instantanée, notamment à la baisse, du débit des moyens d'alimentations, les moyens de régulation peuvent assurer un débit minimum de carburant du dispositif d'injection dans la chambre de combustion afin d'éviter l'extinction de la combustion du carburant dans la chambre de combustion.

En régulant l'injection du carburant en fonction la variation du débit des moyens d'alimentation, on évite de former des sillages chauds, tels que ceux rencontrés dans l'état de la technique, tout en prévenant les risques d'extinction de la combustion. En effet, les inventeurs ont constaté que la variation du débit de carburant des moyens d'alimentation est un paramètre plus pertinent du risque d'extinction de la combustion que le débit de carburant (des moyens d'alimentation ou du dispositif d'injection) lui-même.

Le dispositif d'injection comprend une rampe d'injection comprenant au moins un injecteur privilégié et au moins un injecteur principal.

Les moyens de régulation permettent d'augmenter le débit de carburant de l'injecteur privilégié par rapport au débit de carburant de l'injecteur principal si la valeur de la variation instantanée du débit de carburant des moyens d'alimentation devient inférieure à un seuil prédéterminé.

L'injection de carburant dans la chambre de combustion est assurée par la rampe d'injection comprenant d'une part un injecteur (ou un ensemble d'injecteurs) dit principal, et d'autre part, un injecteur (ou un ensemble d'injecteurs) dit privilégié. En régime normal, l'injection est assurée par l'injecteur principal et par l'injecteur privilégié. Préférentiellement, en régime normal, le débit de carburant de l'injecteur privilégié est sensiblement égal au débit de l'injecteur principal. En d'autres termes, dans le cas où il y a plusieurs injecteurs privilégiés et/ou principaux, en régime normal, le débit de chaque injecteur privilégié est préférentiellement égal au débit de chaque injecteur principal.

Par « régime normal » on entend un régime où le débit de carburant des moyens d'alimentation varie faiblement ou varie selon des transitoires ne présentant pas de risque d'extinction de la combustion du carburant dans la chambre de combustion. Lorsque la turbomachine fonctionne dans un régime anormal, par exemple en cas de variation brutale du débit de carburant des moyens d'alimentation, il existe un risque d'extinction de combustion. Par exemple, un tel risque d'extinction survient lors d'un freinage d'urgence (également connu sous le nom de « quick stop ») qui consiste à cabrer un hélicoptère. Lors de ce transitoire, le rotor ne prélève plus la puissance de la turbomachine et le débit de carburant des moyens d'alimentation décroit très rapidement pour atteindre une valeur quasi nulle en moins de 0.5 s, ou moins, selon la brutalité de la manœuvre et de la réactivité du dispositif de régulation de la machine. Alors, selon l'invention, en régime anormal le débit de l'injecteur privilégié est augmenté par rapport au débit de l'injecteur principal, de manière à éviter l'interruption de l'injection ou une diminution trop brutale du débit d'injection de carburant et l'extinction de la combustion dans la chambre de combustion. Plus particulièrement, lorsque la valeur de la variation instantanée du débit de carburant des moyens d'alimentation est inférieure à un seuil prédéterminé, l'injection est assurée de manière privilégiée par l'injecteur privilégié, c'est-à-dire que le débit de carburant de l'injecteur privilégié est augmenté par rapport au débit de l'injecteur principal. Ainsi, si en régime normal le débit de l'injecteur privilégié est égal au débit de l'injecteur principal, on comprend qu'en régime anormal le débit de l'injecteur privilégié est alors supérieur au débit de l'injecteur principal.

Lorsque la valeur de la variation instantanée du débit de carburant des moyens d'alimentation est inférieure à un seuil prédéterminé, l'injection dans la chambre de combustion est assurée par l'injecteur privilégié, utilisé seul ou en combinaison avec l'injecteur principal, le débit de ce dernier étant inférieur au débit de l'injecteur privilégié. Ainsi, l'injection de carburant au niveau de l'injecteur privilégié peut-être effectuée au détriment de l'injection de carburant réalisée par l'injecteur principal. C'est-à-dire que les moyens de régulation donnent la priorité à l'injection par l'injecteur privilégié en augmentant le débit de l'injecteur privilégié par rapport au débit de l'injecteur principal tout en diminuant le débit de l'injecteur principal par rapport au débit de l'injecteur privilégié, même si cela doit entrainer une coupure de l'injection par l'injecteur principal. Ainsi, selon cette variante, quel que soit le débit d'alimentation en carburant du dispositif d'injection de carburant, les moyens de régulation assurent un débit minimal d'injection de carburant par l'injecteur privilégié, évitant ainsi une extinction de la combustion.

Préférentiellement, le seuil prédéterminé est égal à une valeur négative correspondant à une forte décroissance instantanée du débit de carburant des moyens d'alimentation qui n'est pas considérée comme un transitoire relatif à un régime normal (i.e. qui est considéré comme un transitoire relatif à un régime anormal), c'est-à-dire susceptible d'entrainer une extinction de la combustion de carburant dans la chambre de combustion. Ainsi, il est possible de décélérer très brutalement le régime de la turbomachine selon l'invention sans risque d'extinction de la combustion de carburant dans la chambre de combustion.

Préférentiellement, les moyens de régulation permettent de répartir le débit de carburant de la rampe d'injection de manière à augmenter le débit de carburant de l'injecteur privilégié par rapport au débit de carburant de l'injecteur principal.

On comprend que pour un débit global délivré au sein de la chambre de combustion, ce débit global correspondant au débit global de la rampe d'injection, les moyens de régulation repartissent ce débit global entre l'injecteur privilégié et l'injecteur principal de manière à augmenter le débit de l'injecteur privilégié par rapport au débit de l'injecteur principal. Ainsi, afin de conserver ce débit global donné, l'augmentation du débit de l'injecteur privilégié entraine la diminution du débit de l'injecteur principal.

Avantageusement, les moyens de régulation comprennent un répartiteur du flux de carburant entre l'injecteur privilégié et l'injecteur principal.

Le répartiteur de flux permet de répartir le flux d'alimentation en carburant de la rampe d'injection entre l'injecteur principal et l'injecteur privilégié. Ce répartiteur peut-être un organe mécanique ou hydromécanique du type vanne à clapet et ressort(s) ou un organe électromécanique du type électrovanne, cette dernière pouvant être commandée, par exemple, par une unité de contrôle électronique (ou ECU pour « electronic control unit »). Selon une variante, chaque injecteur est piloté indépendamment par un ECU, ce dernier pouvant alors jouer le rôle de répartiteur.

Avantageusement, les moyens d'alimentation comprennent un doseur de carburant, la variation instantanée du débit de carburant des moyens d'alimentation étant mesurée à l'aide d'un résolveur relié au doseur de carburant.

Un doseur de carburant permet d'ajuster le débit de carburant. Grâce à un résolveur, on peut mesurer la position, et la vitesse de déplacement du doseur. Ainsi, on peut mesurer la variation instantanée du débit de carburant du doseur, chaque position du doseur étant associée à un débit prédéterminé, et donc des moyens d'alimentation. Par exemple, en considérant que la course complète du doseur varie entre 0 et 100 (0 : doseur totalement fermé ; 100 : doseur totalement ouvert), on considère qu'une variation instantanée de -40/sec (moins 40 par seconde), c'est-à-dire une variation de 40 de la position du doseur dans le sens de la fermeture du doseur en une seconde, constitue une valeur seuil pour activer la régulation du débit de carburant dans la chambre de combustion. En d'autres termes, une variation de -40% par seconde de la position du doseur peut être prise comme valeur seuil.

Selon une variante, les moyens d'alimentation comprennent un doseur de carburant et une commande du doseur pour ajuster le débit de carburant délivré par le doseur, la variation instantanée du débit de carburant des moyens d'alimentation étant déterminée à partir de la lecture des consignes envoyées à la commande du doseur pour ajuster le débit de carburant délivré par le doseur.

Grâce à cette variante, la consigne permettant de piloter la position du doseur, en d'autres termes l'ouverture/fermeture du doseur, est utilisée comme paramètre pour mesurer la variation instantanée du débit de carburant des moyens d'alimentation. La mesure de la variation instantanée du débit de carburant des moyens d'alimentation à l'aide de la consigne de la commande du doseur est plus précise et plus rapide que celle réalisée à l'aide d'un résolveur car on traite directement une consigne interne des moyens d'alimentation et on évite une mesure intermédiaire réalisée via le résolveur. De la même manière que précédemment, une consigne pilotant une variation de -40% par seconde de la position du doseur peut être prise comme valeur seuil pour activer la régulation du débit de carburant dans la chambre de combustion.

La turbomachine comprend en outre un arbre de générateur de gaz, et des moyens de mesure de l'accélération instantanée de l'arbre de générateur de gaz, le débit de carburant du dispositif d'injection étant en outre régulée en fonction de l'accélération instantanée de l'arbre de générateur de gaz. Bien entendu cette régulation du débit de carburant du dispositif d'injection en fonction de l'accélération instantanée de l'arbre de générateur de gaz est réalisée par les moyens de régulation.

Les moyens de régulation permettent de supprimer l'augmentation du débit de carburant de l'injecteur privilégié par rapport au débit de l'injecteur principal si la valeur de l'accélération instantanée de l'arbre de générateur de gaz est supérieure à un seuil prédéterminé.

L'accélération instantanée (en rotation) de l'arbre de générateur de gaz est un indicateur du régime et des transitoires de régime de la turbomachine. Ainsi, on peut considérer qu'à partir d'un certain seuil prédéterminé de l'accélération instantanée de l'arbre de générateur de gaz il n'existe plus de risque d'extinction de la combustion dans la chambre de combustion et qu'il n'est plus nécessaire que le débit de carburant de l'injecteur privilégié soit supérieur au débit de carburant de l'injecteur principal. En d'autres termes, les moyens de mesure permettent de mesurer la décélération (i.e. une accélération négative) de l'arbre de générateur de gaz. Les décélérations de l'arbre de générateur de gaz reflètent une situation où il peut exister un risque d'extinction de la combustion dans la chambre de combustion. On peut, par exemple considérer qu'il n'existe plus de risque d'extinction de la combustion lorsque cette décélération devient nulle. Par la suite on utilise le terme générique « accélération », ce terme couvrant tant les accélérations positives que les accélérations négatives, c'est-à-dire les décélérations.

Par exemple, une accélération instantanée nulle peut être ainsi utilisée comme seuil prédéterminé. En effet, suite à une décélération brutale, une accélération instantanée nulle indique que la turbomachine est sortie du régime anormal, qu'elle est en phase d'accélération (on passe d'une accélération négative à une accélération nulle), de sorte qu'il n'existe plus de risque d'extinction de la combustion dans la chambre de combustion. Selon une variante, le seuil prédéterminé est égal à 3% de la vitesse nominale (en rotation) de l'arbre de générateur de gaz par seconde.

Selon une variante, les moyens de régulation permettent de supprimer progressivement l'augmentation de débit de carburant de l'injecteur privilégié par rapport à l'injecteur principal. L'aspect progressif de la suppression permet de sécuriser l'injection dans la chambre de combustion. En effet, une suppression trop brutale de l'augmentation de débit de l'injecteur privilégié pourrait créer un risque de microcoupure d'alimentation en carburant de l'injecteur privilégié. On notera qu'une coupure de l'alimentation pendant une durée de l'ordre de trois millièmes de seconde est suffisante pour éteindre la combustion dans la chambre de combustion. Par exemple, la suppression de l'augmentation de débit est réalisée par une série de plusieurs paliers de diminution de l'augmentation de débit. Par exemple, la suppression de l'augmentation de débit est réalisée par une série de dix paliers correspondant chacun à une diminution de 10% de la valeur totale de l'augmentation totale de débit de carburant. De manière générale, pour éviter les phénomènes de microcoupure, les augmentations et/ou diminutions de débit de l'injecteur privilégié et/ou principal sont avantageusement pilotées de manière progressive.

L'invention concerne également un procédé tel que défini par la revendication 6 pour réguler l'injection de carburant d'une turbomachine selon l'invention comportant les étapes de :
- déterminer la variation instantanée du débit de carburant des moyens d'alimentation, et
- réguler le débit de carburant du dispositif d'injection en fonction de la variation instantanée du débit de carburant des moyens d'alimentation.

Afin de réguler le débit de carburant dans la chambre de combustion d'une turbomachine, le procédé consiste d'une part à déterminer la variation instantanée du débit de carburant des moyens d'alimentation, et d'autre part à utiliser la variation instantanée ainsi déterminée comme paramètre pour réguler le débit instantané de carburant du dispositif d'injection. Ce procédé est mis en œuvre sur une turbomachine selon l'invention où l'étape de détermination de la variation instantanée du débit de carburant des moyens d'alimentation est réalisée grâce aux moyens de détermination de la variation instantanée du débit de carburant des moyens d'alimentation. L'étape de régulation instantanée du débit de carburant est réalisée grâce aux moyens de régulation du débit de carburant dans la chambre de combustion.

Notons que dans le cadre de la mise en oeuvre de ce procédé, la régulation du débit peut se faire de manière automatique, mais peut également être activée de manière manuelle, par exemple lorsque l'utilisateur veut sécuriser de manière préventive son utilisation de la turbomachine dans des conditions présentant un risque d'extinction de combustion de carburant. En d'autres termes, l'utilisateur peut forcer l'injection privilégiée, en augmentant le débit de l'injecteur privilégié par rapport au débit de l'injecteur principal, afin de sécuriser l'utilisation de la turbomachine. Les conditions d'utilisation d'une turbomachine présentant un risque d'extinction de combustion de carburant sont notamment des conditions où la turbomachine fonctionne dans un régime proche du ralenti, ou lorsque le milieu environnant présente un risque d'ingestion d'eau (de pluie ou de neige) dans la turbomachine.

Par ailleurs, ce procédé peut-être avantageusement activé ou désactivé, dans le cadre d'essais de la turbomachine, afin d'évaluer, à titre préventif, la stabilité de la combustion dans la chambre de combustion (et donc le risque d'extinction dans des conditions données) indépendamment du dispositif. Ce type d'opération permet également d'évaluer la marge de sécurité conférée par ce procédé pour réguler l'injection de carburant dans la chambre de combustion et par le dispositif associé. Ce type de manipulation permet aussi de tester le bon fonctionnement du dispositif.

On augmente le débit de carburant de l'injecteur privilégié par rapport au débit de carburant de l'injecteur principal si la valeur de la variation instantanée du débit de carburant des moyens d'alimentation devient inférieure à un seuil prédéterminé.

Cette étape additionnelle du procédé permet d'améliorer sa mise en œuvre en utilisant un injecteur dédié à une injection privilégiée permettant une meilleure régulation du débit. On comprend que la valeur de seuil prédéterminée est choisie préférentiellement de telle sorte que lorsque la valeur de la variation instantanée du débit de carburant des moyens d'alimentation devient inférieure à un seuil prédéterminé, la turbomachine subit une forte variation de régime.

La mise en œuvre de cette étape additionnelle, présente plusieurs variantes. On comprend que de manière générale, lorsque le débit de carburant de l'injecteur privilégié est augmenté par rapport au débit de carburant de l'injecteur principal (en régime de turbomachine anormal), la valeur du débit augmenté de l'injecteur privilégié est supérieure à la valeur du débit de carburant de l'injecteur privilégié en régime normal (à vitesse de rotation et charge de la turbomachine égale). Inversement, lorsque le régime de la turbomachine redevient normal, on comprend que l'augmentation de débit de l'injecteur privilégié est supprimée et sa valeur est inférieure à la valeur du débit en régime anormal (à vitesse de rotation et charge de la turbomachine égale).

Selon une première variante, l'injecteur privilégié délivre un débit de carburant fixe et prédéterminé, lorsque la valeur de la variation instantanée du débit de carburant des moyens d'alimentation devient inférieure au seuil prédéterminé. Inversement, l'injecteur privilégié délivre un débit de carburant variable et, préférentiellement égal au débit de l'injecteur principal, lorsque la valeur de la variation instantanée du débit de carburant des moyens d'alimentation devient supérieure au seuil prédéterminé.

Selon une seconde variante, le seuil prédéterminé est une série de valeurs prédéterminées. Lorsque la variation instantanée du débit de carburant des moyens d'alimentation devient inférieure à une première valeur prédéterminée, l'injecteur privilégié injecte du carburant selon un premier débit fixe et prédéterminé. Ensuite, si la variation devient inférieure à une seconde valeur prédéterminée, inférieure à la première valeur prédéterminée, le premier débit de l'injecteur privilégié est augmenté pour atteindre un second débit fixe et prédéterminé plus important que le premier débit. Ainsi, l'injecteur privilégié peut injecter du carburant en augmentant, respectivement diminuant, son débit selon autant d'incréments, respectivement de décréments, que de valeurs de seuil prédéterminées, pour atteindre un débit maximal, respectivement un débit correspondant au débit en régime normal (i.e. débit minimal).

Selon une troisième variante, le seuil prédéterminé est une plage continue de valeurs prédéterminées. Lorsque la variation instantanée du débit de carburant des moyens d'alimentation entre dans cette plage de valeurs, le débit de l'injecteur privilégié est augmenté par rapport au débit de l'injecteur principal pour délivrer un débit de carburant proportionnel à la valeur de la variation instantanée, de manière continue sur la plage de valeurs. Ainsi, le débit est augmenté par rapport au débit de l'injecteur principal lorsque la variation instantanée devient à peine inférieure à la première limite de la plage de valeurs prédéterminées, et il augmente continûment jusqu'à un débit maximum quand la variation instantanée décroit jusqu'à devenir inférieure à la deuxième limite de la plage de valeurs prédéterminées. Inversement, le débit de l'injecteur privilégié diminue lorsque la variation instantanée devient supérieure à la deuxième limite de la plage de valeurs prédéterminées jusqu'à atteindre un débit de carburant correspondant au débit de carburant en régime normal lorsque la variation instantanée devient supérieure à la première limite de la plage de valeurs prédéterminées.

Ainsi, on comprend que lorsque le régime du moteur est considéré comme présentant un risque d'extinction de la combustion, le débit de l'injecteur privilégié est augmenté par rapport au débit de l'injecteur principal, l'injecteur privilégié assurant ainsi une fonction veilleuse visant à empêcher la combustion de s'arrêter, tandis que lorsque le régime moteur ne présente plus de risque d'extinction de la combustion, le débit de l'injecteur privilégié correspond au débit de carburant en régime normal où il n'est pas augmenté par rapport au débit de l'injecteur principal.

Préférentiellement, on augmente le débit de carburant de l'injecteur privilégié par rapport au débit de carburant de l'injecteur principal en répartissant le flux global du dispositif d'injection de manière privilégiée vers l'injecteur privilégié.

Avantageusement, on augmente le débit de carburant de l'injecteur privilégié pendant une durée prédéterminée.

On comprend donc que lorsque cette durée prédéterminée est écoulée, l'augmentation de débit est supprimée et le débit de carburant de l'injecteur privilégié retourne à une valeur de débit correspondant au débit de carburant en régime normal. Par exemple, la durée prédéterminée est égale à quinze secondes (15.0 s).

On mesure en outre l'accélération instantanée de l'arbre de générateur de gaz, et on régule en outre le débit de carburant du dispositif d'injection en fonction de l'accélération instantanée de l'arbre de générateur de gaz.

Lorsque le débit de carburant de l'injecteur privilégié a été augmenté, l'augmentation de débit de l'injecteur privilégiée par rapport au débit de l'injecteur principal est supprimée lorsque la valeur de l'accélération instantanée de l'arbre de générateur de gaz est (ou redevient) supérieure à un (ou au) seuil prédéterminé. Préférentiellement, l'augmentation de débit de l'injecteur privilégiée par rapport au débit de l'injecteur principal est supprimée après qu'une durée prédéterminée se soit écoulée.

L'invention et ses avantages seront mieux compris à la lecture de la description détaillée faite ci-après de différents modes de réalisation donnés à titre d'exemples non limitatifs. Cette description fait référence aux figures annexées, sur lesquelles :
- la figure 1 représente de manière schématique une turbomachine selon l'invention, et
- la figure 2 représente un organigramme décrivant les étapes du procédé de régulation selon l'invention.

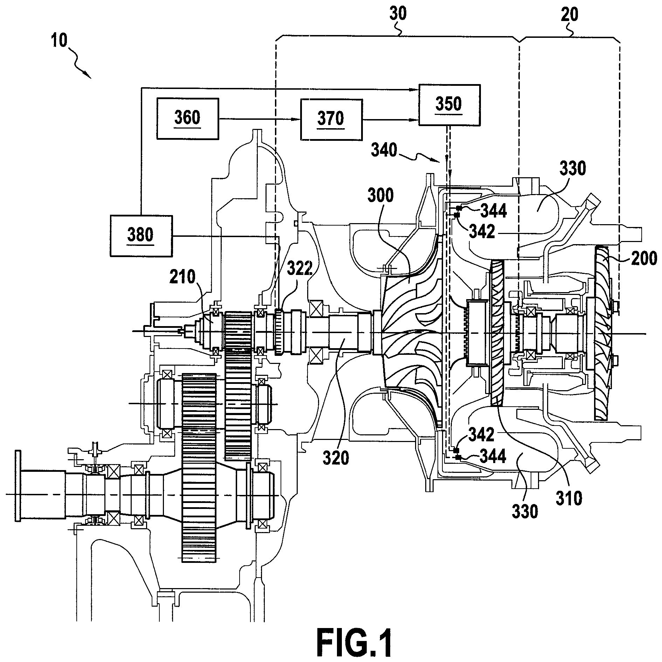

La figure 1 représente une turbomachine 10 comprenant une turbine libre 20 et un générateur de gaz 30. Le générateur de gaz 30 comporte un compresseur 300, une roue de turbine 310 montées sur un arbre de générateur de gaz 320, et une chambre de combustion 330. Les gaz sortant du générateur de gaz 30 entraînent en rotation la roue de turbine 200 de la turbine libre 20 montée sur un arbre de turbine 210.

La turbomachine 10 est en outre équipée d'un dispositif d'injection 340 comprenant une rampe d'injection comprenant des injecteurs principaux 342 et des injecteurs privilégiés 344. Le dispositif d'injection 340 est régulé par des moyens de régulation 350 afin de réguler le débit de carburant dans la chambre de combustion 330. Les moyens de régulation 350 sont notamment destinés à augmenter le débit des injecteurs privilégiés 344. Des moyens d'alimentation 360 alimentent en carburant le dispositif d'injection 340. Pour la clarté de la figure, les connexions entre les moyens d'alimentation 360 et le dispositif d'injection 340 ne sont pas représentées. Les moyens d'alimentation 360 comprennent un doseur de carburant et une commande du doseur (non représentés).

La turbomachine 10 comprend également des moyens de détermination 370 pour déterminer la variation instantanée du débit de carburant des moyens d'alimentation 360. Ces moyens de détermination 370 comprennent, par exemple, un calculateur et une mémoire (non représentés) incluant des moyens de lecture des consignes envoyées à la commande du doseur de carburant (consignes de commande). Les moyens de détermination 370 sont reliés aux moyens de régulation 350.

Par ailleurs, la turbomachine 10 comprend des moyens de mesure 380 pour mesurer l'accélération de l'arbre de générateur de gaz 320. Ces moyens de mesure 380 mesurent la vitesse de rotation de l'arbre de générateur de gaz, de laquelle on déduit l'accélération de l'arbre de générateur de gaz 320, à partir de la roue phonique 322 solidaire de l'arbre de générateur de gaz 320 et, par exemple, à l'aide d'un calculateur et d'une mémoire (non représentés). Les moyens de mesure 380 sont reliés aux moyens de régulation 350.

Les flèches sur les connections entre les moyens d'alimentation 360, les moyens de détermination 370, les moyens de mesure 380, les moyens de régulation 350 et le dispositif d'injection 340 représentent les flux d'information qui circulent entre ces différents éléments.

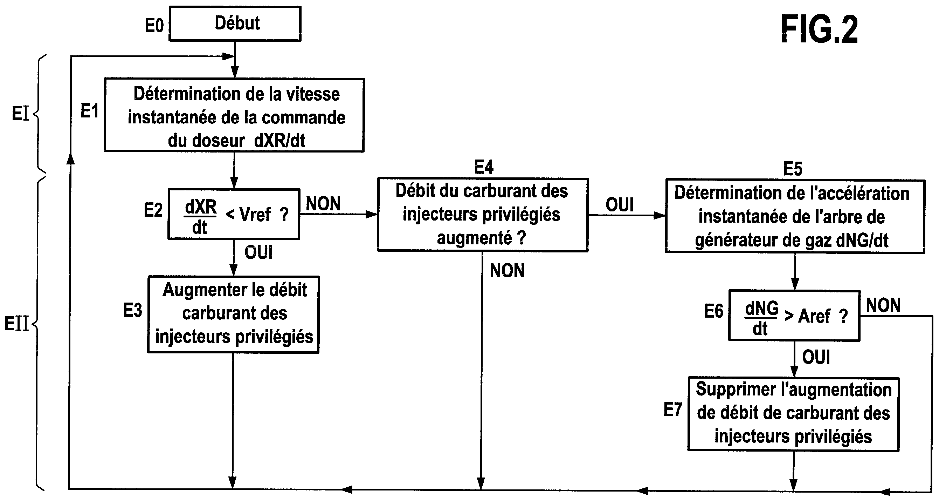

Le fonctionnement de cette turbomachine 10 est décrit en référence à la figure 2. L'organigramme de la figure 2 représente le procédé selon l'invention pour réguler automatiquement l'injection de carburant dans la chambre de combustion 330 de la turbomachine 10.

Le procédé débute de préférence lorsque la turbomachine est démarrée et s'arrête lorsque la turbomachine est arrêtée, même si cela arrive en cours d'exécution du procédé. Pour cette raison, il n'y a pas de « fin » pour indiquer la fin du procédé sur la figure 2. Pour la suite, pour désigner un cycle complètement réalisé du procédé de régulation, nous utiliserons le terme « cycle de régulation ».

Le procédé commence donc à l'étape E0 « début ». Le procédé est ensuite divisé en deux étapes principales : une première étape EI où on détermine la variation instantanée du débit de carburant des moyens d'alimentation 360, et une seconde étape EII où on régule le débit instantané de carburant dans la chambre de combustion 330 en fonction de la variation instantanée du débit de carburant des moyens d'alimentation 360 déterminée lors de l'étape EI.

L'étape EI comprend une seule étape E1 qui consiste à déterminer la vitesse instantanée dXR/dt du doseur, XR correspondant à la position du doseur. Cette détermination de vitesse instantanée est réalisée, de manière connue par ailleurs, à l'aide des moyens de détermination 370, et en particulier à l'aide des moyens de lecture de la consigne envoyée à la commande du doseur pour piloter la position du doseur, du calculateur et de la mémoire des moyens de détermination 370. On notera que la vitesse du doseur est positive si la consigne de commande vise à augmenter le débit du doseur tandis qu'elle est négative si la consigne de commande vise à diminuer le débit du doseur. A l'issue de l'étape E1, la première étape EI de détermination de la variation instantanée du débit de carburant des moyens d'alimentation 360 est achevée. En effet, la vitesse instantanée dXR/dt du doseur est représentative de la variation du débit de carburant des moyens d'alimentation 360. A l'issue de l'étape EI, le procédé passe à l'étape EII. En d'autres termes, à l'issue de l'étape E1, le procédé passe à l'étape E2.

L'étape E2 consiste à comparer la valeur de la vitesse instantanée dXR/dt du doseur par rapport à une valeur de seuil prédéterminée V_{ref}. On notera que lors d'une brusque décélération de la turbomachine, la vitesse instantanée dXR/dt est négative, et donc, pour détecter cette brusque décélération, la valeur de seuil V_{ref} est également négative. Si la variation instantanée de la vitesse instantanée dXR/dt est inférieure à la valeur de seuil prédéterminée V_{ref} (« OUI » à l'issue de l'étape E3), le procédé détermine qu'il y a un risque d'extinction de la combustion et passe à l'étape E3. Si la vitesse instantanée dXR/dt est supérieure ou égale à la valeur de seuil prédéterminée V_{ref} (« NON » à l'issue de l'étape E3), le procédé passe à l'étape E4. L'étape E2 est réalisée par les moyens de régulation 350.

L'étape E3 consiste à augmenter le débit des injecteurs privilégiés 344 par rapport au débit des injecteur principaux 342, cette augmentation étant réalisée par les moyens de régulation 350. Lorsque le débit des injecteurs privilégiés est augmenté, l'étape EII de régulation de débit instantané est achevée, le procédé de régulation achève son cycle de régulation et entame un cycle ultérieur en recommençant à partir de l'étape E1. Bien évidemment, l'exécution d'un cycle de régulation ultérieur peut-être temporisée. C'est-à-dire que l'exécution de ce cycle ultérieur n'est pas immédiate, et qu'un certain délai s'écoule avant l'exécution de ce cycle ultérieur. Cette temporisation est réalisée, par exemple, entre l'étape EII et l'étape EI.

Par ailleurs, on comprend que, si au cours du cycle suivant, l'étape E2 conduit également à l'étape E3, selon les variantes, le débit de carburant de l'injecteur privilégié peut être augmenté de nouveau ou bien être maintenu au niveau auquel il a été augmenté au cours du cycle précédent.

L'étape E4 consiste à vérifier que le débit des injecteurs privilégiés 344 n'est pas augmenté par rapport au débit des injecteurs principaux 342, cette augmentation résultant par exemple d'une étape E3 réalisée au cours d'un précédent cycle de régulation. Cette opération est également réalisée par les moyens de régulation 350. Si le débit des injecteurs privilégiés 344 est augmenté (« OUI » à l'issue de l'étape E4), on passe alors à l'étape E5, les étapes E5 à E7 consistant à déterminer si on peut supprimer cette augmentation de débit des injecteurs privilégiés. En d'autres termes, au cours des étapes E5 à E7 les moyens de régulation 350 déterminent si le risque d'extinction de combustion dans la chambre de combustion 330 est écarté et régulent le débit des injecteurs privilégiés 344 en conséquent. Si le débit des injecteurs privilégiés 344 n'est pas augmenté par rapport au débit des injecteurs principaux 342 (« NON » à l'issue de l'étape E5), l'étape EII de régulation de débit instantané dans la chambre de combustion 330 est achevée, le procédé de régulation achève son cycle de régulation et entame un cycle ultérieur en recommençant à partir de l'étape E1.

L'étape E5 consiste à déterminer l'accélération instantanée dNG/dt de l'arbre de générateur de gaz 320, NG correspondant à la vitesse de rotation de l'arbre de générateur de gaz 320. Cette détermination est réalisée de manière connue par ailleurs à l'aide des moyens de mesure 380, en particulier à l'aide de la roue phonique 322, de la mémoire et du calculateur des moyens de mesure 380. A l'issue de l'étape E5, le procédé passe à l'étape E6.

L'étape E6 consiste à comparer la valeur de l'accélération instantanée dNG /dt de l'arbre de générateur de gaz 320 par rapport à une valeur de seuil prédéterminée A_{ref}. Cette étape est réalisée par les moyens de régulation 350. Si l'accélération instantanée dNG /dt est supérieure ou égale à la valeur de seuil prédéterminée A_{ref} (« OUI » à l'issue de l'étape E53), le procédé considère que l'augmentation de débit des injecteur principaux peut être supprimée et passe à l'étape E7. Si l'accélération instantanée dNG/dt est inférieure à la valeur de seuil prédéterminée A_{ref} (« NON » à l'issue de l'étape E6), alors le procédé considère que le risque d'extinction de la combustion demeure de sorte que le débit de carburant des injecteurs privilégiés reste inchangé. Dans ce cas, l'étape EII de régulation de débit instantané de carburant dans la chambre de combustion 310 est achevée, le procédé de régulation achève son cycle de régulation et entame un cycle ultérieur en recommençant à partir de l'étape E1.

L'étape E7 consiste à supprimer l'augmentation de débit de carburant des injecteurs privilégiés 344 de sorte que leur débit redevienne égal au débit des injecteurs principaux 342. Cette suppression est progressive, par exemple sur une durée de l'ordre de trois secondes (3.0 s), afin d'éviter le désamorçage des injecteurs privilégiés. Par ailleurs, dans le cas où les injecteurs principaux seraient éteints, leur rallumage est également progressif. A l'issue de cette étape E7, l'étape EII de régulation de débit instantané est achevée, le procédé de régulation de débit instantané de carburant dans la chambre de combustion 310 achève son cycle de régulation et entame un cycle ultérieur en recommençant à partir de l'étape E1.

Selon une variante, les moyens de régulation 350 suppriment progressivement (ou selon une alternative, de manière instantanée) l'augmentation de débit des injecteurs privilégiés 344 après un délai de temporisation. Par exemple, ce délai est de trois secondes (3.0 s). Ce délai permet d'éviter que le débit des injecteurs privilégiés 344 soit ramené au débit en régime normal alors que la combustion dans la chambre de combustion 330 peut être encore instable et présenter un risque d'extinction. Ainsi, en temporisant la suppression progressive de l'augmentation de débit des injecteurs privilégiés 344, on attend que la combustion se stabilise avant de supprimer progressivement l'augmentation de débit des injecteurs privilégiés 344. La sécurité de la turbomachine est ainsi améliorée. Cette temporisation est réalisée par exemple, avant ou après l'étape E7.

On comprend que dans cette variante les moyens de régulation 350 enregistrent le temps tn de la commande de suppression progressive de l'augmentation de débit, et commandent effectivement la suppression progressive de l'augmentation de débit des injecteurs privilégiés 344 au cours d'un cycle de régulation ultérieur, à un temps tm ≥ tn+D (tm supérieur ou égal à tn plus D), D étant le délai de temporisation, si la vitesse dXR/dt du doseur est toujours supérieure ou égale à la valeur de seuil prédéterminée V_{ref} et que l'accélération dNG/dt de l'arbre de générateur de gaz est supérieure à A_{ref}.

Selon une variante non revendiquée, les étapes E5 et E6 sont omises, et le procédé passe directement de l'étape E4 à l'étape E7, s'il est répondu « OUI » à l'étape E4. Bien entendu, la suppression progressive de l'augmentation du débit peut être temporisée, comme décrit ci-dessus.

Selon une autre variante non revendiquée, le débit des injecteurs privilégiés est augmenté, ou selon une alternative progressivement augmenté, pendant une durée prédéterminée dans l'étape E3. Ainsi, dans cette variante, les étapes E4 à E7 de la figure 2 sont omises, et l'augmentation de débit des injecteurs privilégiés est supprimée, ou selon une alternative progressivement supprimée, automatiquement au bout d'une durée prédéterminée. Bien entendu, selon une alternative, un cycle de régulation ultérieur est réalisé pendant cette durée prédéterminée, ou selon encore une autre variante, le cycle de régulation ultérieur n'est réalisé que lorsque la durée prédéterminée est écoulée.

## Revendications

1. Turbomachine (10) équipée d'une chambre de combustion (330), d'un dispositif d'injection de carburant (340) dans la chambre de combustion (330), le dispositif d'injection de carburant (340) comprenant une rampe d'injection comprenant au moins un injecteur privilégié (344) et au moins un injecteur principal (342), des moyens d'alimentation (360) pour alimenter en carburant le dispositif d'injection de carburant (340), un arbre de générateur de gaz (320) et des moyens de mesure (380) de l'accélération instantanée (dNG/dt) de l'arbre de générateur de gaz (320), ladite turbomachine (10) étant **caractérisée en ce qu'**elle comporte en outre des moyens de détermination (370) de la variation instantanée du débit de carburant des moyens d'alimentation (360), des moyens de régulation (350) pour réguler le débit de carburant du dispositif d'injection (340) en fonction de la variation instantanée du débit de carburant des moyens d'alimentation (360) déterminée par les moyens de détermination (370) et en fonction de l'accélération instantanée (dNG/dt) de l'arbre de générateur de gaz (320), les moyens de régulation (350) permettant d'augmenter le débit de carburant de l'injecteur privilégié (344) par rapport au débit de carburant de l'injecteur principal (342) si la valeur de la variation instantanée du débit de carburant des moyens d'alimentation (360) devient inférieure à un premier seuil prédéterminé (V_{ref}), et de supprimer l'augmentation du débit de carburant de l'injecteur privilégié (344) par rapport au débit de l'injecteur principal (342) si la valeur de l'accélération instantanée (dNG/dt) de l'arbre de générateur de gaz (320) est supérieure à un deuxième seuil prédéterminé (A_{ref}) et si la variation instantanée du débit de carburant des moyens d'alimentation (360) est supérieure ou égale au premier seuil prédéterminé (V_{ref}).

2. Turbomachine (10) selon la revendication 1, **caractérisée en ce que** les moyens de régulation (350) permettent de répartir le débit de carburant de la rampe d'injection de manière à augmenter le débit de carburant de l'injecteur privilégié (344) par rapport au débit de carburant de l'injecteur principal (342).

3. Turbomachine (10) selon la revendication 1 ou 2, **caractérisée en ce que** les moyens de régulation (350) comprennent un répartiteur du flux de carburant entre l'injecteur privilégié (344) et l'injecteur principal (342).

4. Turbomachine (10) selon l'une quelconque des revendications 1 à 3, **caractérisée en ce que** les moyens d'alimentation (360) comprennent un doseur de carburant, la variation instantanée du débit de carburant des moyens d'alimentation (360) étant mesurée à l'aide d'un résolveur relié au doseur de carburant.

5. Turbomachine (10) selon l'une quelconque des revendications 1 à 4, **caractérisée en ce que** les moyens d'alimentation (360) comprennent un doseur de carburant et une commande du doseur pour ajuster le débit de carburant délivré par le doseur, la variation instantanée du débit de carburant des moyens d'alimentation (360) étant déterminée à partir de la lecture des consignes envoyées à la commande du doseur pour ajuster le débit de carburant délivré par le doseur.

6. Procédé pour réguler l'injection de carburant d'une turbomachine (10) selon l'une quelconque des revendications 1 à 5, ledit procédé étant **caractérisé en ce qu'**il comporte les étapes de :
- déterminer la variation instantanée du débit de carburant des moyens d'alimentation (EI) ;
- mesurer l'accélération instantanée de l'arbre de générateur de gaz (E5), et
- réguler le débit de carburant du dispositif d'injection en fonction de la variation instantanée du débit de carburant des moyens d'alimentation (EII) et en fonction de l'accélération instantanée de l'arbre de générateur de gaz (E6),
dans lequel on augmente le débit de carburant de l'injecteur privilégié (344) par rapport au débit de carburant de l'injecteur principal (342) si la valeur de la variation instantanée du débit de carburant des moyens d'alimentation devient inférieure à un premier seuil prédéterminé (E3) et dans lequel lorsque le débit de carburant de l'injecteur privilégié (344) a été augmenté, l'augmentation de débit de l'injecteur privilégiée (344) par rapport au débit de l'injecteur principal (342) est supprimée lorsque la valeur de l'accélération instantanée de l'arbre de générateur de gaz est supérieure à un deuxième seuil prédéterminé et la variation instantanée du débit de carburant des moyens d'alimentation est supérieure ou égale au premier seuil prédéterminé (E7).

7. Procédé selon la revendication 6, **caractérisé en ce qu'**on augmente le débit de carburant de l'injecteur privilégié (344) par rapport au débit de carburant de l'injecteur principal (342) en répartissant le flux global du dispositif d'injection de manière privilégiée vers l'injecteur privilégié (344).

8. Procédé selon la revendication 6 ou 7, **caractérisé en ce qu'**on augmente le débit de carburant de l'injecteur privilégié (344) pendant une durée prédéterminée.

9. Procédé selon l'une quelconque des revendications 6 à 8, **caractérisé en ce que** l'augmentation de débit de l'injecteur privilégiée (344) par rapport au débit de l'injecteur principal (342) est supprimée après qu'une durée prédéterminée se soit écoulée.

## Patentansprüche

1. Turbomaschine (10), die mit einer Brennkammer (330), einer Vorrichtung zur Injektion von Kraftstoff (340) in die Brennkammer (330), wobei die Kraftstoffinjektionsvorrichtung (340) eine Injektionsrampe umfasst, die mindestens einen privilegierten Injektor (344) und mindestens einen Hauptinjektor (342) umfasst, Versorgungsmitteln (360) zur Kraftstoffversorgung der Kraftstoffinjektionsvorrichtung (340), einer Gasgeneratorwelle (320) und Messmitteln (380) der Momentanen Beschleunigung (dNG/dt) der Gasgeneratorwelle (320) ausgestattet ist,
wobei die Turbomaschine (10) **dadurch gekennzeichnet ist, dass** sie ferner Bestimmungsmittel (370) der momentanen Schwankung des Kraftstoffdurchsatzes der Versorgungsmittel (360), Reguliermittel (350) zum Regeln des Kraftstoffdurchsatzes der Injektionsvorrichtung (340) in Abhängigkeit von der momentanen Schwankung des Kraftstoffdurchsatzes der Versorgungsmittel (360), bestimmt durch die Bestimmungsmittel (370) und in Abhängigkeit von der Momentanen Beschleunigung (dNG/dt) der Gasgeneratorwelle (320) aufweist, wobei die Reguliermittel (350) erlauben, den Kraftstoffdurchsatz des privilegierten Injektors (344) im Verhältnis zum Kraftstoffdurchsatz des Hauptinjektors (342) zu erhöhen, wenn der Wert der momentanen Schwankung des Kraftstoffdurchsatzes der Versorgungsmittel (360) unter einen ersten vorher festgelegten Grenzwert (V_{ref}) fällt, und die Erhöhung des Kraftstoffdurchsatzes des privilegierten Injektors (344) im Verhältnis zum Durchsatz des Hauptinjektors (342) einzustellen, wenn der Wert der Momentanen Beschleunigung (dNG/dt) der Gasgeneratorwelle (320) über einem zweiten vorher festgelegten Grenzwert (A_{ref}) liegt und wenn die momentane Schwankung des Kraftstoffdurchsatzes der Versorgungsmittel (360) größer oder gleich dem ersten vorher festgelegten Grenzwert (V_{ref}) ist.

2. Turbomaschine (10) nach Anspruch 1, **dadurch gekennzeichnet, dass** die Reguliermittel (350) erlauben, den Kraftstoffdurchsatz der Injektionsrampe derart zu verteilen, dass der Kraftstoffdurchsatz des privilegierten Injektors (344) im Verhältnis zum Kraftstoffdurchsatz des Hauptinjektors (342) erhöht wird.

3. Turbomaschine (10) nach Anspruch 1 oder 2, **dadurch gekennzeichnet, dass** die Reguliermittel (350) einen Verteiler des Kraftstoffflusses zwischen dem privilegierten Injektor (344) und dem Hauptinjektor (342) umfassen.

4. Turbomaschine (10) nach einem der Ansprüche 1 bis 3, **dadurch gekennzeichnet, dass** die Versorgungsmittel (360) einen Kraftstoffdosierer umfassen, wobei die momentane Schwankung des Kraftstoffdurchsatzes der Versorgungsmittel (360) mit Hilfe eines Resolvers gemessen wird, der mit dem Kraftstoffdosierer verbunden ist.

5. Turbomaschine (10) nach einem der Ansprüche 1 bis 4, **dadurch gekennzeichnet, dass** die Versorgungsmittel (360) einen Kraftstoffdosierer und eine Steuerung des Dosierers umfassen, um den von dem Dosierer bereitgestellten Kraftstoffdurchsatz einzustellen, wobei die momentane Schwankung des Kraftstoffdurchsatzes der Versorgungsmittel (360) auf der Basis der Ablesung der Sollwerte bestimmt wird, die an die Steuerung des Dosierers geschickt werden, um den von dem Dosierer bereitgestellten Kraftstoffdurchsatz einzustellen.

6. Verfahren zum Regeln der Kraftstoffinjektion einer Turbomaschine (10) nach einem der Ansprüche 1 bis 5, wobei das Verfahren **dadurch gekennzeichnet ist, dass** es die folgenden Schritte aufweist:
- Bestimmen der momentanen Schwankung des Kraftstoffdurchsatzes der Versorgungsmittel (EI);
- Messen der Momentanen Beschleunigung der Gasgeneratorwelle (E5), und
- Regeln des Kraftstoffdurchsatzes der Injektionsvorrichtung in Abhängigkeit von der momentanen Schwankung des Kraftstoffdurchsatzes der Versorgungsmittel (EII) und in Abhängigkeit von der Momentanen Beschleunigung der Gasgeneratorwelle (E6),
wobei der Kraftstoffdurchsatz des privilegierten Injektors (344) im Verhältnis zum Kraftstoffdurchsatz des Hauptinjektors (342) erhöht wird, wenn der Wert der momentanen Schwankung des Kraftstoffdurchsatzes der Versorgungsmittel unter einen ersten vorher festgelegten Grenzwert (E3) sinkt und wobei, wenn der Kraftstoffdurchsatz des privilegierten Injektors (344) erhöht wurde, die Durchsatzerhöhung des privilegierten Injektors (344) im Verhältnis zum Durchsatz des Hauptinjektors (342) eingestellt wird, wenn der Wert der Momentanen Beschleunigung der Gasgeneratorwelle über einem zweiten vorher festgelegten Grenzwert liegt und der momentanen Schwankung des Kraftstoffdurchsatzes der Versorgungsmittel größer oder gleich dem ersten vorher festgelegten Grenzwert (E7) ist.

7. Verfahren nach Anspruch 6, **dadurch gekennzeichnet, dass** der Kraftstoffdurchsatz des privilegierten Injektors (344) im Verhältnis zum Kraftstoffdurchsatz des Hauptinjektors (342) durch Verteilen des globalen Flusses von der Injektionsvorrichtung privilegiert zum privilegierten Injektor (344) erhöht wird.

8. Verfahren nach Anspruch 6 oder 7, **dadurch gekennzeichnet, dass** der Kraftstoffdurchsatz des privilegierten Injektors (344) während einer vorher festgelegten Dauer erhöht wird.

9. Verfahren nach einem der Ansprüche 6 bis 8, **dadurch gekennzeichnet, dass** die Erhöhung des Durchsatzes des privilegierten Injektors (344) im Verhältnis zum Durchsatz des Hauptinjektors (342) eingestellt wird, nachdem eine vorher festgelegte Dauer vergangen ist.

## Claims

1. A turbomachine (10) equipped with a combustion chamber (330), with a fuel injection device (340) in the combustion chamber (330), the fuel injection device (340) comprising an injection ramp comprising at least one privileged injector (344) and at least one main injector (342), supply means (360) for supplying fuel to the fuel injection device (340), a gas generator shaft (320) and means (380) for measuring the instantaneous acceleration (dNG/dt) of the gas generator shaft (320), said turbomachine (10) being **characterized in that** it further includes means (370) for determining the instantaneous variation of the fuel flow rate of the supply means (360), regulation means (350) for regulating the fuel flow rate of the injection device (340) according to the instantaneous variation of the fuel flow rate of the supply means (360) determined by the determination means (370) and according to the instantaneous acceleration (dNG/dt) of the gas generator shaft (320), the regulation means (350) allowing an increase in the fuel flow rate of the privileged injector (344) relatively to the fuel flow rate of the main injector (342) if the value of the instantaneous variation of the fuel flow rate of the supply means (360) becomes less than a first predetermined threshold (V_{ref}), and to suppress the increase in the fuel flow rate of the privileged injector (344) relatively to the flow rate of the main injector (342) if the value of the instantaneous acceleration (dNG/dt) of the gas generator shaft (320) is greater than a second predetermined threshold (A_{ref}) and if the value of the instantaneous variation of the fuel flow rate of the supply means (360) becomes greater than or equal to the first predetermined threshold (V_{ref}).

2. The turbomachine (10) according to claim 1, **characterized in that** the regulation means (350) give the possibility of distributing the fuel flow rate of the injection ramp so as to increase the fuel flow rate of the privileged injector (344) relatively to the fuel flow rate of the main injector (342).

3. The turbomachine (10) according to claim 1 or 2, **characterized in that** the regulation means (350) comprise a distributor of the fuel flow between the privileged injector (344) and the main injector (342).

4. The turbomachine (10) according to any of claims 1 to 3, **characterized in that** the supply means (360) comprise a fuel meter, the instantaneous variation of the fuel flow rate of the supply means (360) being measured by means of a resolver connected to the fuel meter.

5. The turbomachine (10) according to any of claims 1 to 4, **characterized in that** the supply means (360) comprise a fuel meter and a control of the meter for adjusting the fuel flow rate delivered by the meter, the instantaneous variation of the fuel flow rate of the supply means (360) being determined from the reading of the set values sent to the control of the meter for adjusting the fuel flow rate delivered by the meter.

6. A method for regulating the fuel injection of a turbomachine (10) according to any of claims 1 to 5, said method being **characterized in that** it includes the steps:
- determining the instantaneous variation of the fuel flow rate of the supply means (EI);
- measuring the instantaneous acceleration of the gas generator shaft (E5), and
- regulating the fuel flow rate of the injection device according to the instantaneous variation of the fuel flow rate of the supply means (EII) and according to the instantaneous acceleration of the gas generator shaft (E6),
wherein the fuel flow rate of the privileged injector (344) is increased relatively to the fuel flow rate of the main injector (342) if the value of the instantaneous variation of the fuel flow rate of the supply means becomes less than a first predetermined threshold (E3) and wherein when the fuel flow rate of the privileged injector (344) has been increased, the increase in the flow rate of the privileged injector (344) relatively to the flow rate of the main injector (342) is suppressed when the value of the instantaneous acceleration of the gas generator shaft is greater than a second predetermined threshold and the instantaneous variation of the fuel flow rate of the supply means becomes greater or equal to a first predetermined threshold (E7).

7. The method according to claim 6, **characterized in that** the fuel flow rate of the privileged injector (344) is increased relatively to the fuel flow rate of the main injector (342) by distributing the global flow from the injection device in a privileged way towards the privileged injector (344).

8. The method according to claim 6 or 7, **characterized in that** the fuel flow rate of the privileged injector (344) is increased for a predetermined period.

9. The method according to any one of claims 6 to 8, **characterized in that** the flow rate increase of the privileged injector (344) relatively to the flow rate of the main injector (342) is suppressed after a predetermined period has elapsed.
